# EUROPEAN PATENT APPLICATION

(11) **EP 2 669 867 A2**
(43) Date of publication of application: **04.12.2013**
(21) Application number: 13275121.5
(22) Date of filing: 21.05.2013
(51) Int. Cl.: G06T 11/00, B60R 1/00

(54) **Device and method of displaying driving auxiliary information**

(30) Priority: 30.05.2012 KR 20120057540
(71) Applicant: Samsung Electro-Mechanics Co., Ltd., Gyeonggi-do (KR)
(72) Inventor: Kim, Gyu Won, 443-743 Gyeonggi-do (KR); Ha, Joo Young, 443-743 Gyeonggi-do (KR)
(74) Representative: Potter Clarkson LLP

(57) **Abstract**

Disclosed herein is a device of displaying driving auxiliary information capable of providing information on an obstacle positioned on an expected path on which a vehicle will move as well as the expected path according to a steering angle. The device includes: a camera photographing a real image; a first storing unit in which a guide line image for a driving trajectory of a vehicle is divided for each steering angle and stored; a steering sensor detecting a steering angle of the vehicle; a plurality of distance sensors measuring distances to an object positioned at an outer portion of the vehicle and spaced apart from each other; and a controlling unit connected to the first storing unit, the steering sensor, and the distance sensors.

## Description

### CROSS REFERENCE(S) TO RELATED APPLICATIONS

This application claims the benefit under 35 U.S.C. Section 119 of Korean Patent Application Serial No. 10-2012-0057540, entitled "Device and Method of Displaying Driving Auxiliary Information" filed on May 30, 2012, which is hereby incorporated by reference in its entirety into this application.

### BACKGROUND OF THE INVENTION

### 1. Technical Field

The present invention relates to a device and method of displaying driving auxiliary information.

### 2. Description of the Related Art

In accordance with the recent rapid development of digital image processing technologies and devices, technologies of outputting an image for a situation around a vehicle through a monitor to assist in safe driving have been released.

Only a significantly limited field of view may be secured at the rear of a driver as compared to the front or the left and right thereof, such that large and small fender benders or collisions have frequently occur at the time of rear parking of the vehicle. The development of a technology of providing driving auxiliary information on the rear of the vehicle has been concentrated.

As an example, a technology of allowing a vehicle to be more easily controlled at the time of backward movement of the vehicle by synthesizing an image photographed through a camera and a guide line image divided according to a steering angle of a handle with each other and then outputting the synthesized image to a display device has been introduced in Patent Document 1.

However, according to the technology introduced in Patent Document 1, even though an expected movement trajectory according to the steering angle may be displayed, information on whether or not an obstacle is positioned in a vehicle movement direction or information on a distance up to the corresponding obstacle has not been provided.

Meanwhile, a technology of displaying a distance between a vehicle and an obstacle and variably displaying a length of a dynamic vehicle path line according to the distance between the vehicle and the obstacle has been introduced in Patent Document 2.

However, according to the technology disclosed in Patent Document 2, even though the distance between the vehicle and the obstacle may be informed in real time, the fact that the movement direction of the vehicle is changed according to the steering angle has not been reflected in information on the obstacle.

Therefore, in the case in which the vehicle moves backwardly while rotating at a predetermined angle, a warning may be generated against an obstacle positioned at a position unrelated to the movement direction of the vehicle to confuse the driver.

In addition, since the case in which a warning is not generated against an obstacle positioned at the movement direction of the vehicle may also be generated, a collision may be caused, as opposed to an original object that is to assist in driving.

### [Related Art Document]

### [Patent Document]

(Patent Document 1) Korea Patent Laid-open Publication No. 10-2010-0129965

(Patent Document 2) Korea Patent Laid-open Publication No. 10-2011-0093726.

### SUMMARY OF THE INVENTION

An object of the present invention is to provide a device of displaying driving auxiliary information capable of providing information on an obstacle positioned on an expected path on which a vehicle will move as well as the expected path according to a steering angle.

Another object of the present invention is to provide a method of displaying driving auxiliary information capable of providing information on an obstacle positioned on an expected path on which a vehicle will move as well as the expected path according to a steering angle.

According to an exemplary embodiment of the present invention, there is provided a device of displaying driving auxiliary information, the device including: a camera photographing a real image; a first storing unit in which a guide line image for a driving trajectory of a vehicle is divided for each steering angle and stored; a steering sensor detecting a steering angle of the vehicle; a plurality of distance sensors measuring distances to an object positioned at an outer portion of the vehicle and spaced apart from each other; and a controlling unit connected to the first storing unit, the steering sensor, and the distance sensors, whereby an image photographed in the camera, the guide line image according to the steering angle of the vehicle, and an object present at an internal region of a guide line are displayed.

The controlling unit may include: a guide line extractor extracting the guide line image according to the steering angle detected in the steering sensor from the first storing unit; a position calculator calculating a position of the object using a plurality of distance values measured in the distance sensors; and a determinator determining whether or not the object is present at the internal region of the guide line, and only in the case in which the determinator determines that the object is present at the internal region of the guide line, the distance to the object is displayed at the internal region of the guide line.

The guide line image stored in the first storing unit may be encoded in an MRLC format including color information, a data width, and a blank width.

According to another exemplary embodiment of the present invention, there is provided a device of displaying driving auxiliary information, the device including: a first storing unit in which a guide line image for a driving trajectory of a vehicle is divided for each steering angle and stored; a second storing unit in which an object warning image to be displayed at each of the n divided regions of an inner portion of a guide line is divided and stored, with respect to each of the guide line images divided for each steering angle; a steering sensor detecting a steering angle of the vehicle; a plurality of distance sensors measuring distances to an object positioned at an outer portion of the vehicle and spaced apart from each other; and a controlling unit connected to the first storing unit, the second storing unit, the steering sensor, and the distance sensors, whereby an object present at an internal region of the guide line according to the steering angle of the vehicle is displayed.

The controlling unit may include: a guide line extractor extracting the guide line image according to the steering angle detected in the steering sensor from the first storing unit; and an object warning image extractor calculating a position of the object using a plurality of distance values measured in the distance sensors and extracting an object warning image corresponding to the position of the object from the second storing unit to combine the guide line image and the object warning image with each other.

The guide line image stored in the first storing unit and the object warning image stored in the second storing unit may be encoded in an MRLC format including color information, a data width, and a blank width.

According to still another exemplary embodiment of the present invention, there is provided a method of displaying driving auxiliary information, the method including: (A) dividing a guide line image for a driving trajectory of a vehicle for each steering angle and pre-storing the divided guide line images; (B) detecting a steering angle of the vehicle; (C) extracting a guide line image corresponding to the steering angle detected in step (B) among the guide line images for the driving trajectory of the vehicle; (D) measuring distances to an object positioned at an outer portion of the vehicle in each of a plurality of distance sensors spaced apart from each other; and (E) calculating a position of the object using a plurality of distance values measured in step (D), whereby an object present at an inner portion of a guide line is displayed together with the guide line.

In the case in which the position of the object calculated in step (E) corresponds to an internal region of the guide line, the position of the object may be displayed at the inner portion of the guide line, and in the case in which the position of the object corresponds to an external region of the guide line, only the guide line may be displayed.

The guide line image for the driving trajectory of the vehicle divided for each steering angle and pre-stored may be encoded in an MRLC format including color information, a data width, and a blank width, and step (C) may include decoding the guide line image encoded in the MRLC format.

According to still another exemplary embodiment of the present invention, there is provided a method of displaying driving auxiliary information, the method including: (a) dividing a guide line image for a driving trajectory of a vehicle for each steering angle and pre-storing the divided guide line images; (b) pre-storing object warning images to be displayed at each of the n divided regions of an inner portion of a guide line, with respect to each of the guide line images divided for each steering angle; (c) detecting a steering angle of the vehicle; (d) extracting a guide line image corresponding to the steering angle detected in step (c) among the guide line images for the driving trajectory of the vehicle; (e) measuring distances to an object positioned at an outer portion of the vehicle in each of a plurality of distance sensors spaced apart from each other; and (f) calculating a position of the object using a plurality of distance values measured in step (e) and extracting an object warning image corresponding to the position of the object among the object warning images, whereby an object present at an internal region of the guide line according to the steering angle of the vehicle is displayed.

The method may further include combining the guide line image extracted in step (d) and the object warning image extracted in step (f) with each other and outputting the combined image.

The guide line image and the object warning image may be encoded in an MRLC format including color information, a data width, and a blank width, and step (d) or step (f) may include decoding the guide line image or the object warning image encoded in the MRLC format.

### BRIEF DESCRIPTION OF THE DRAWINGS

FIG. 1 is a view schematically showing a device of displaying driving auxiliary information according to an exemplary embodiment of the present invention.
FIG. 2 is a view showing a controlling unit of the device of displaying driving auxiliary information according to the exemplary embodiment of the present invention in detail.
FIG. 3 is a view schematically showing a device of displaying driving auxiliary information according to another exemplary embodiment of the present invention.
FIG. 4 is a view showing a controlling unit of the device of displaying driving auxiliary information according to another exemplary embodiment of the present invention in detail.
FIG. 5 is a view describing a principle of sensing and displaying an object according to the related art.
FIG. 6 is a view describing a principle of sensing and displaying an object according to the exemplary embodiment of the present invention.

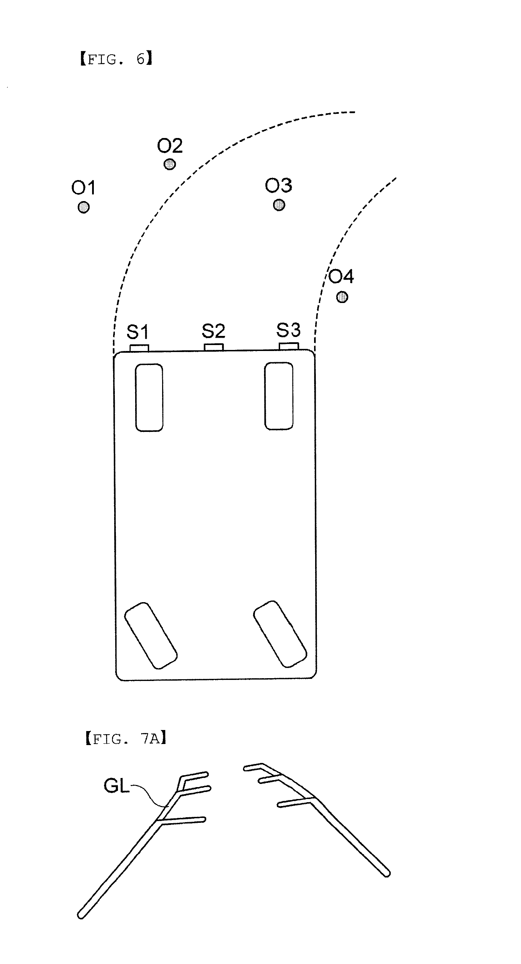

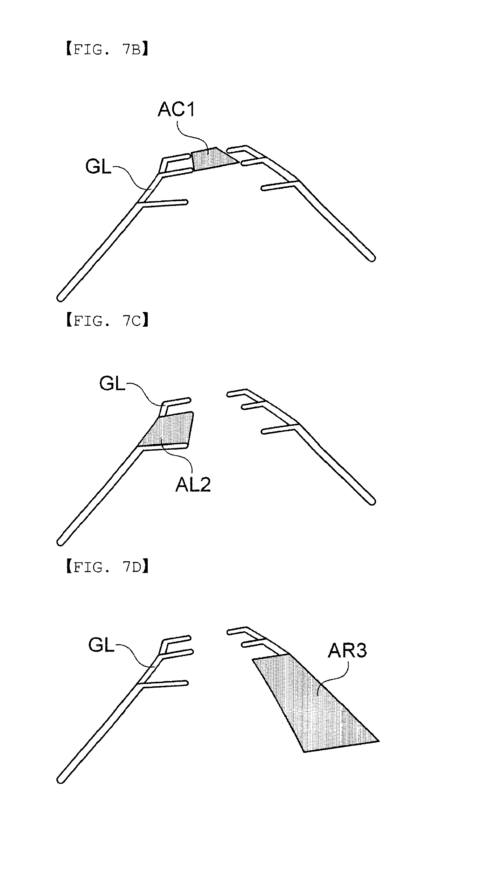

FIGS. 7A to 7D are views schematically showing a screen displaying the driving auxiliary information according to the exemplary embodiment of the present invention, wherein FIG. 7A is a view showing a case in which an object is not present at an inner portion of a guide line, such that an object warning image is not displayed; FIG. 7B is a view showing a case in which the object is present at an upper end of the center of the inner portion of the guide line, such that the guide line and the object warning image are displayed; FIG. 7C is a view showing a case in which the object is present at a central end of the left of the inner portion of the guide line, such that the guide line and the object warning image are displayed; and FIG. 7D is a view showing a case in which the object is present at a lower end of the right of the inner portion of the guide line, such that the guide line and the object warning image are displayed.
FIG. 8 is a view schematically showing a method of displaying driving auxiliary information according to the exemplary embodiment of the present invention.
FIG. 9 is a view schematically showing a modified example of FIG. 8.
FIG. 10 is a view schematically showing a method of displaying driving auxiliary information according to another exemplary embodiment of the present invention.

### DESCRIPTION OF THE PREFERRED EMBODIMENTS

Various advantages and features of the present invention and methods accomplishing thereof will become apparent from the following description of embodiments with reference to the accompanying drawings. However, the present invention may be modified in many different forms and it should not be limited to the embodiments set forth herein. These embodiments may be provided so that this disclosure will be thorough and complete, and will fully convey the scope of the invention to those skilled in the art. Like reference numerals throughout the description denote like elements.

Terms used in the present specification are for explaining the embodiments rather than limiting the present invention. Unless explicitly described to the contrary, a singular form includes a plural form in the present specification. The word "comprise" and variations such as "comprises" or "comprising," will be understood to imply the inclusion of stated constituents, steps, operations and/or elements but not the exclusion of any other constituents, steps, operations and/or elements.

Hereinafter, a configuration and an acting effect of exemplary embodiments of the present invention will be described in more detail with reference to the accompanying drawings.

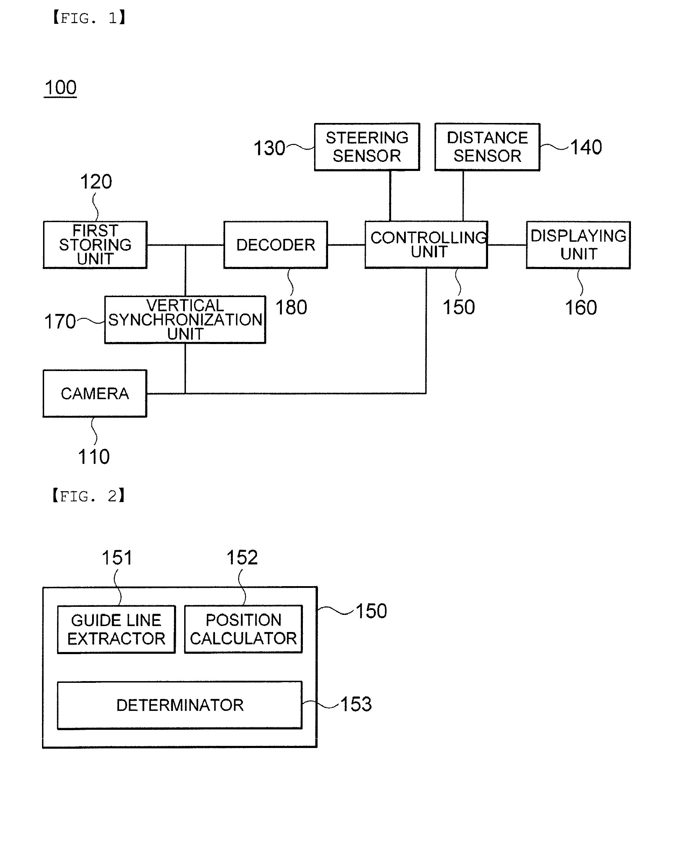

FIG. 1 is a view schematically showing a device 100 of displaying driving auxiliary information according to an exemplary embodiment of the present invention.

Referring to FIG. 1, the device 100 of displaying driving auxiliary information according to the exemplary embodiment of the present invention may include a camera 110, a first storing unit 120, a steering sensor 130, a distance sensor 140, and a controlling unit 150.

The camera 110 may be implemented by a general digital camera and particularly serve to photograph a real image for the rear of a vehicle.

The first storing unit 120 may be implemented by various data storing devices. However, it is preferable that the first storing unit 120 is implemented by a flash memory, or the like, having a relatively rapid data reading/writing speed in order to rapidly process data.

The first storing unit 120 may store a guide line image therein, wherein the guide line image may be divided for each steering angle and stored so that an expected path for the vehicle to be driven may be displayed according to the steering angle of the vehicle.

The steering sensor 130 may serve to detect an angle formed by wheels of the vehicle. That is, the steering sensor 130 may detect the steering angle from an angle of the wheel itself of the vehicle or detect the steering angle from a rotation angle of a steering wheel. In addition, as described in Patent Document 1, the steering sensor 130 may also be implemented in a scheme of providing the steering angle to the controlling unit 150 through a separate communication unit.

The distance sensor 140 may be implemented by the known ultrasonic sensor, or the like. According to the exemplary embodiment of the present invention, at least two distance sensors 140 needs to be provided at the rear of the vehicle so as to be spaced apart from each other.

The device 100 of displaying driving auxiliary information according to the exemplary embodiment of the present invention needs to obtain information on a position of an object present at an outer portion of the vehicle, which may be accomplished by detecting an approximate position of the object using distance values measured in each of a plurality of distance sensors 140 spaced apart from each other by a predetermined distance.

The controlling unit 150 may be connected to the steering sensor 130, the first storing unit 120, and the distance sensor 140, be implemented by a general MCU, CPU, or the like, extract the guide line image according to the steering angle, calculate a position of the object, and display the object present at an internal region of the guide line to output the displayed object together with the real image photographed in the camera 110 to a displaying unit 160.

Here, the displaying unit 160 may be implemented by various display devices such as a liquid crystal display, and the like, and be provided to a driver.

Further, in displaying the object present at the internal region of the guide line, the position of the object may be directly displayed at the inner portion of the guide line, or a warning symbol or a numeral indicating a distance may be displayed at a predetermined region on the displaying unit 160, separately from the guide line.

However, even in this case, only the object present at the inner portion of the guide line is displayed. That is, in the case in which the object is present at an outer portion of the guide line, nothing is displayed.

FIG. 2 is a view showing a controlling unit 150 of the device 100 of displaying driving auxiliary information according to the exemplary embodiment of the present invention in detail.

Referring to FIG. 2, the controlling unit 150 of the device 100 of displaying driving auxiliary information according to the exemplary embodiment of the present invention may include a guide line extractor 151, a position calculator 152, and a determinator 153.

The guide line extractor 151 serves to extract a guide line image according to the steering angle detected in the steering sensor 130 from the first storing unit 120.

That is, when the guide line extracting unit 151 receives information on the steering angle from the steering sensor 130, it may search data stored in the first storing unit 120 to read data on the guide line image pre-stored with respect to the corresponding steering angle.

The position calculator 152 serves to receive information on distance values from the plurality of distance sensors 140 to the object to calculate the position of the object.

When it is assumed that the distance sensors 140 spaced apart from each other by 1m are provided, a distance from a left distance sensor 140 to the object is 1.5m, and a distance from a right distance sensor 140 to the object is 0.8m, it may be determined that the object is positioned at a point at which a semicircle having a radius of 1.5m based on the left distance sensor 140 and a semicircle having a radius of 0.8m based on the right distance sensor 140 intersect with each other.

This may be the simplest example. When the number of distance sensors 140 increases and a conditional equation according to the increase in the number of distance sensors 140 is reflected, the position of the object may be more accurately derived.

The determinator 153 compares the position of the object calculated in the position calculator 152 with the guide line image to determine whether or not the object is presented in the internal region of the guide line.

Therefore, only in the case in which it is determined that the object is positioned in the internal region of the guide line, warning information informing the existence of the object may be output together with the guide line image to the displaying unit 160.

Meanwhile, the guide line images stored in the first storing unit 120 may be stored as a color image. Therefore, the driver may more intuitively recognize the information on a distance.

However, when the color image is stored as a general bitmap image, a JPEG image, or the like, data capacity thereof is several times larger than that of a black and white image. Therefore, in the case in which many guide line images are stored for each steering angle, an element having an excellent processing capability needs to be provided in order to rapidly and efficiently process the many guide line images.

In order to solve this problem, the guide line image may be encoded in an MRLC format including color information, a data width of a region configured of a corresponding color, and a blank width of a region in which an image is not present and then stored in the first storing unit 120.

Meanwhile, the device 100 of displaying driving auxiliary information according to the exemplary embodiment of the present invention may further include a decoder 180 decoding the guide line image encoded in the MRLC format and then store in the first storing unit 120 in a process of extracting the guide line image in the guide line extractor 151.

In addition, a vertical synchronization unit 170 may be connected between the first storing unit 120 and an output terminal of the camera 110 to serve to synchronize a vertical synchronization signal.

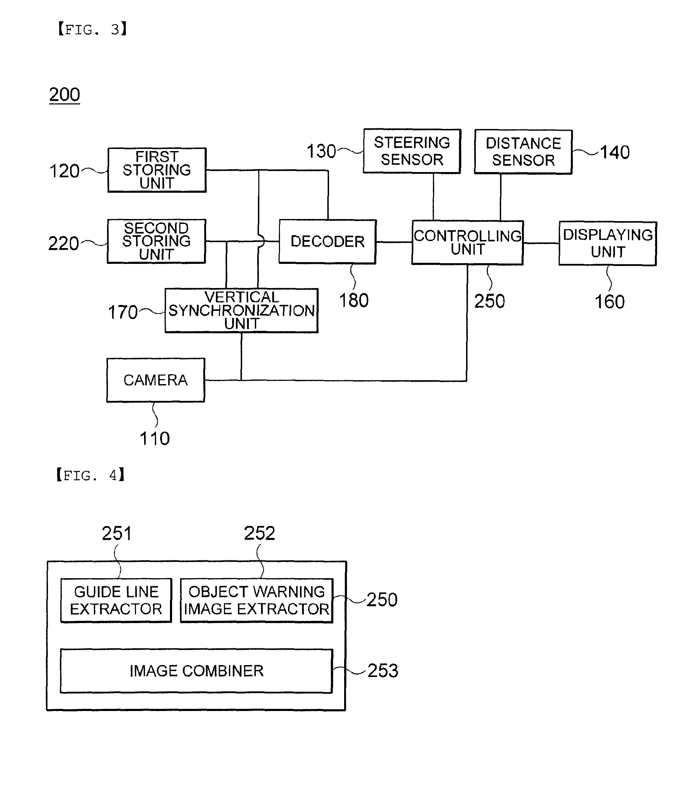

FIG. 3 is a view schematically showing a device 200 of displaying driving auxiliary information according to another exemplary embodiment of the present invention.

Referring to FIG. 3, the device 200 of displaying driving auxiliary information according to another exemplary embodiment of the present invention is different from the device 100 of displaying driving auxiliary information according to the exemplary embodiment of the present invention in that it further includes a second storing unit 220. Therefore, hereinafter, a description overlapped with that of the above-mentioned exemplary embodiment of the present invention will be omitted, and portions different from those of the above-mentioned exemplary embodiment of the present invention will be mainly described.

The second storing unit 220 stores an object warning image according to a position of an object therein.

Here, the object warning image means an image to be displayed at a region corresponding to the position of the object among n regions when an inner portion of a guide line image divided for each steering angle is divided into the n region.

For example, in the case in which the steering angle is 30 degrees toward the left, the inner portion of the corresponding guide line image may be divided into 9 regions [(an upper region, a central region, and a lower region)×(a left region, a central region, a right region)] and the object warning images to be displayed at each region may be pre-stored in the second storing unit 220.

FIG. 4 is a view showing a controlling unit 250 of the device 200 of displaying driving auxiliary information according to another embodiment of the present invention in detail.

Referring to FIG. 4, the controlling unit 250 of the device 200 of displaying driving auxiliary information according to another exemplary embodiment of the present invention may include a guide line extractor 251 and an object warning image extractor 252.

Here, the object warning image extractor 252 may calculate the position of the object using the distance values measured in the distance sensors 140 and extract an object warning image corresponding to the position of the object from the second storing unit 220 according to the calculation result.

In addition, the image combiner 253 may combine the guide line image and the object warning image with each other to output the combined image to the displaying unit 160.

Here, the camera 110 may be further provided to output the image generated by combining the guide line image with the object warning image together with the real image photographed by the camera 110 to the displaying unit 160.

In addition, the object warning image stored in the second storing unit 220 may also be encoded in the above-mentioned MRLC format.

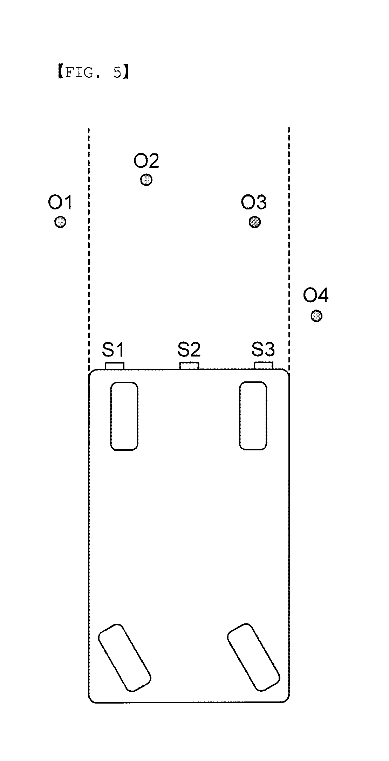

FIG. 5 is a view describing a principle of sensing and displaying an object according to the related art; and FIG. 6 is a view describing a principle of sensing and displaying an object according to the exemplary embodiment of the present invention.

Referring to FIGS. 5 and 6, according to the related art, distance information or a warning alarm for all of the objects 01, 02, 03, and 04 sensed in distance sensors S1, S2, and S3 has been output regardless of an expected driving trajectory of a vehicle.

However, in the device of displaying driving auxiliary information according to the exemplary embodiments of the present invention, a separate warning is not output to objects 01, 02, and 04 positioned at an outer portion of a guide line image indicating an expected driving trajectory according to a steering angle of the vehicle, and a warning or distance information may be displayed for an object 03 positioned at an inner portion of the guide line image.

Therefore, a driver may obtain information more accurate as compared to the related art with respect to a situation of a direction in which he/she moves.

FIGS. 7A to 7D are views schematically showing a screen displaying the driving auxiliary information according to the exemplary embodiment of the present invention, wherein FIG. 7A is a view showing a case in which an object is not present at an inner portion of a guide line GL, such that an object warning image is not displayed; FIG. 7B is a view showing a case in which the object is present at an upper end of the center of the inner portion of the guide line GL, such that the guide line GL and the object warning image AC1 are displayed; FIG. 7C is a view showing a case in which the object is present at a central end of the left of the inner portion of the guide line GL, such that the guide line GL and the object warning image AL2 are displayed; and FIG. 7D is a view showing a case in which the object is present at a lower end of the right of the inner portion of the guide line GL, such that the guide line GL and the object warning image AR3 are displayed.

Referring to FIGS. 7A to 7D, in the case in which the object is not positioned at an internal region of the guide line GL, only a guide line GL image according to the steering angle is displayed as shown in FIG. 7A.

However, in the case in which the object is positioned at the internal region of the guide line GL, information on the existence of the object may be provided and the object warning images AC1, AL2, and AR3 in which the internal regions of the guide line is divided to approximately reflect the position of the object may be provided together with the guide line GL image, as shown in FIGS. 7B to 7C.

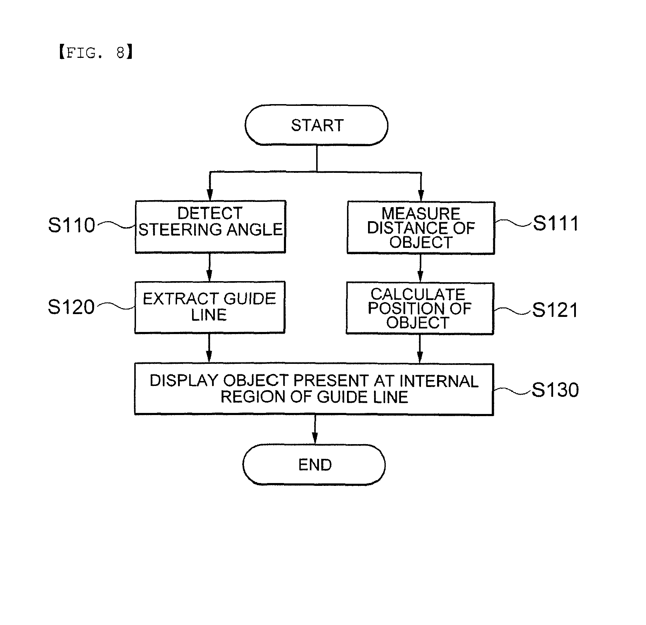

FIG. 8 is a view schematically showing a method of displaying driving auxiliary information according to the exemplary embodiment of the present invention.

The method of displaying driving auxiliary information according to the exemplary embodiment of the present invention is basically based on a state in which the guide line image is divided for each steering angle and pre-stored in a separate storing unit.

First, a steering angle of a vehicle is detected (S110), and a distance of an object is measured (S111).

Next, a guide line image according to the steering angle detected in step (S110) among pre-stored guide line images is extracted (S120).

In addition, a position of the object is calculated using distance values of the object measured in step S111 (S121).

Next, the object present at an internal region of a guide line is displayed (S130).

In this case, the position of the object may be directly displayed at the internal region of the guide line or whether or not the object is present or a distance up to the object may be displayed at a region having a position relationship unrelated to the guide line.

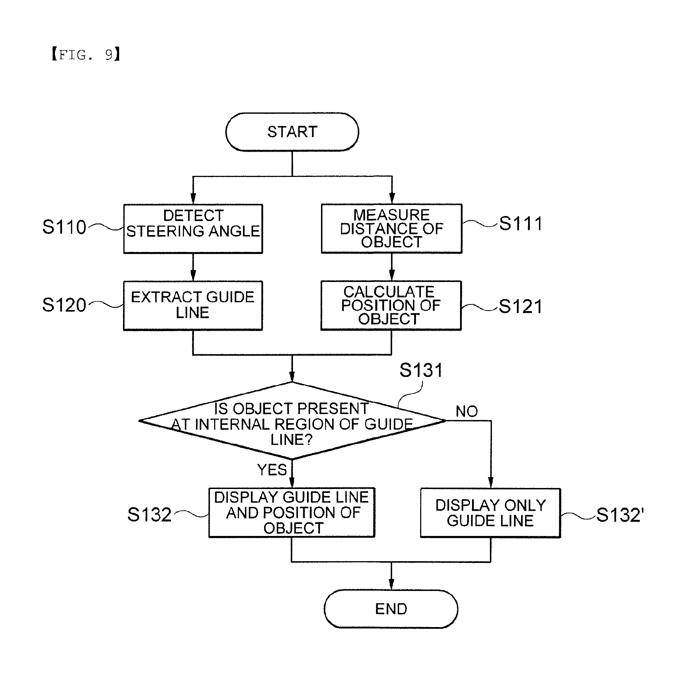

FIG. 9 is a view schematically showing a modified example of FIG. 8.

Referring to FIG. 9, in the present modified example, a process of displaying an object present at the internal region of the guide line in the exemplary embodiment described with reference to FIG. 8 is further specified.

When the extraction of the guide line image and the calculation of the position of the object are completed, whether or not the object is present in the internal region of the guide line is determined (S131).

In the case in which the object is present at the internal region of the guide line, the position of the object in the guide line is displayed (S132). Otherwise, only the guide line is displayed (S132').

Meanwhile, the guide line image may be an image encoded in the MRLC format and then stored. Here, the process of extracting the guide line image may include a process of decoding the guide line image encoded in the MRLC format.

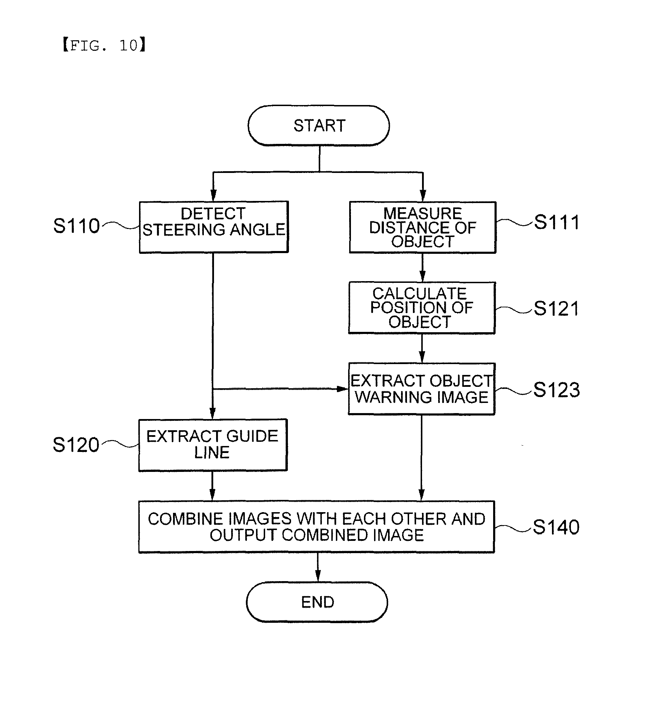

FIG. 10 is a view schematically showing a method of displaying driving auxiliary information according to another exemplary embodiment of the present invention.

Referring to FIG. 10, the method of displaying driving auxiliary information according to another exemplary embodiment of the present invention is different from the method displaying driving auxiliary information according to the exemplary embodiment of the present invention described with reference to FIGS. 8 and 9 in that it includes extracting (S123) an object warning image using a detected steering angle and a calculated position of an object.

In addition, the method of displaying driving auxiliary information according to another exemplary embodiment of the present invention needs to be based on a state in which the object warning images to be displayed at each of the n divided regions of an inner portion of the guide line are pre-stored with respect to guide line images and each of the guide line images divided for each steering angle.

In addition, the extracted guide line image and the object warning image may be combined with each other and then output (S140) or may be output together with a real image obtained through a separately provided camera.

As set forth above, according to the exemplary embodiments of the present invention, information on an obstacle positioned on an expected path on which a vehicle will move as well as the expected path according to a steering angle is provided, thereby making it possible to improve convenience of driving.

The present invention has been described in connection with what is presently considered to be practical exemplary embodiments. Although the exemplary embodiments of the present invention have been described, the present invention may be also used in various other combinations, modifications and environments. In other words, the present invention may be changed or modified within the range of concept of the invention disclosed in the specification, the range equivalent to the disclosure and/or the range of the technology or knowledge in the field to which the present invention pertains. The exemplary embodiments described above have been provided to explain the best state in carrying out the present invention. Therefore, they may be carried out in other states known to the field to which the present invention pertains in using other inventions such as the present invention and also be modified in various forms required in specific application fields and usages of the invention. Therefore, it is to be understood that the invention is not limited to the disclosed embodiments. It is to be understood that other embodiments are also included within the spirit and scope of the appended claims.

## Claims

1. A device of displaying driving auxiliary information, the device comprising:
a camera photographing a real image;
a first storing unit in which a guide line image for a driving trajectory of a vehicle is divided for each steering angle and stored;
a steering sensor detecting a steering angle of the vehicle;
a plurality of distance sensors measuring distances to an object positioned at an outer portion of the vehicle and spaced apart from each other; and
a controlling unit connected to the first storing unit, the steering sensor, and the distance sensors,
whereby an image photographed in the camera, the guide line image according to the steering angle of the vehicle, and an object present at an internal region of a guide line are displayed.

2. The device according to claim 1, wherein the controlling unit includes:
a guide line extractor extracting the guide line image according to the steering angle detected in the steering sensor from the first storing unit;
a position calculator calculating a position of the object using a plurality of distance values measured in the distance sensors; and
a determinator determining whether or not the object is present at the internal region of the guide line, and
wherein only in the case in which the determinator determines that the object is present at the internal region of the guide line, the distance to the object is displayed at the internal region of the guide line.

3. The device according to claim 2, wherein the guide line image stored in the first storing unit is encoded in an MRLC format including color information, a data width, and a blank width.

4. A device of displaying driving auxiliary information, the device comprising:
a first storing unit in which a guide line image for a driving trajectory of a vehicle is divided for each steering angle and stored;
a second storing unit in which an object warning image to be displayed at each of the n divided regions of an inner portion of a guide line is divided and stored, with respect to each of the guide line images divided for each steering angle;
a steering sensor detecting a steering angle of the vehicle;
a plurality of distance sensors measuring distances to an object positioned at an outer portion of the vehicle and spaced apart from each other; and
a controlling unit connected to the first storing unit, the second storing unit, the steering sensor, and the distance sensors,
whereby an object present at an internal region of the guide line according to the steering angle of the vehicle is displayed.

5. The device according to claim 4, wherein the controlling unit includes:
a guide line extractor extracting the guide line image according to the steering angle detected in the steering sensor from the first storing unit; and
an object warning image extactor calculating a position of the object using a plurality of distance values measured in the distance sensors and extracting an object warning image corresponding to the position of the object from the second storing unit to combine the guide line image and the object warning image with each other.

6. The device according to claim 5, wherein the guide line image stored in the first storing unit and the object warning image stored in the second storing unit are encoded in an MRLC format including color information, a data width, and a blank width.

7. A method of displaying driving auxiliary information, the method comprising:
(A) dividing a guide line image for a driving trajectory of a vehicle for each steering angle and pre-storing the divided guide line images;
(B) detecting a steering angle of the vehicle;
(C) extracting a guide line image corresponding to the steering angle detected in step (B) among the guide line images for the driving trajectory of the vehicle;
(D) measuring distances to an object positioned at an outer portion of the vehicle in each of a plurality of distance sensors spaced apart from each other; and
(E) calculating a position of the object using a plurality of distance values measured in step (D),
whereby an object present at an inner portion of a guide line is displayed together with the guide line.

8. The method according to claim 7, wherein in the case in which the position of the object calculated in step (E) corresponds to an internal region of the guide line, the position of the object is displayed at the inner portion of the guide line, and
in the case in which the position of the object corresponds to an external region of the guide line, only the guide line is displayed.

9. The method according to claim 8, wherein the guide line image for the driving trajectory of the vehicle divided for each steering angle and pre-stored is encoded in an MRLC format including color information, a data width, and a blank width, and
step (C) includes decoding the guide line image encoded in the MRLC format.

10. A method of displaying driving auxiliary information, the method comprising:
(a) dividing a guide line image for a driving trajectory of a vehicle for each steering angle and pre-storing the divided guide line images;
(b) pre-storing object warning images to be displayed at each of the n divided regions of an inner portion of a guide line, with respect to each of the guide line images divided for each steering angle;
(c) detecting a steering angle of the vehicle;
(d) extracting a guide line image corresponding to the steering angle detected in step (c) among the guide line images for the driving trajectory of the vehicle;
(e) measuring distances to an object positioned at an outer portion of the vehicle in each of a plurality of distance sensors spaced apart from each other; and
(f) calculating a position of the object using a plurality of distance values measured in step (e) and extracting an object warning image corresponding to the position of the object among the object warning images,
whereby an object present at an internal region of the guide line according to the steering angle of the vehicle is displayed.

11. The method according to claim 10, further comprising combining the guide line image extracted in step (d) and the object warning image extracted in step (f) with each other and outputting the combined image.

12. The method according to claim 11, wherein the guide line image and the object warning image are encoded in an MRLC format including color information, a data width, and a blank width, and
step (d) or step (f) includes decoding the guide line image or the object warning image encoded in the MRLC format.
